# EUROPEAN PATENT SPECIFICATION

(11) **EP 0 420 982 B1**
(45) Date of publication and mention of the grant of the patent: **09.10.1996**
(21) Application number: 89906446.3
(22) Date of filing: 02.06.1989
(51) Int. Cl.: G11B 7/00, G11B 7/24

(54) **OPTICAL CARD HAVING A LIGHT-ABSORBING LAYER**
OPTISCHE KARTE MIT LICHTABSORBIERENDER SCHICHT
CARTE OPTIQUE POURVUE D'UNE COUCHE PHOTOABSORBANTE

(30) Priority: 21.06.1988 JP 152530/88
(43) Date of publication of application: 10.04.1991
(73) Proprietor: Kyodo Printing Co., Ltd., Tokyo 112 (JP)
(72) Inventor: FUJITA, Minoru,Kyodo Printing Co., Ltd., Bunkyo-ku, Tokyo 112 (JP); FUKUSHIMA, Yoichi,Kyodo Printing Co., Ltd., Bunkyo-ku, Tokyo 112 (JP)
(74) Representative: Hallam, Arnold Vincent
(86) International application number: JP8900559
(87) International publication number: WO8912888

(56) References cited:
- GB-A- 2 148 148
- JP-A- 0 637 535
- JP-A- 5 811 196
- PATENT ABSTRACTS OF JAPAN vol. 9, no. 170 (P-373)(1893) 16 July 1985 & JP-A-60 047 247
- IEEE TRANSLATION JOURNAL ON MAGNETICS IN JAPAN vol. 3, no. 11, November 1988, pages 789 - 798; F. MATSUI ET AL.: 'An optical recording disk using an organicdye medium in regard to provide interchangeability to the disks using different organic dyes'
- PATENT ABSTRACTS OF JAPAN vol. 10, no. 127 (P-455)13 May 1986 & JP-A-60 251 557
- PATENT ABSTRACTS OF JAPAN vol. 12, no. 422 (P-783)9 November 1988 & JP-A-63 155 440
- IEEE Journal of Quantum Electronics, Vol. QE 14, No 7, July 1978 "Antireflection Structures for Optical Recording".

## Description

### TECHNICAL FIELD

This invention relates to a system comprising a write once optical card reader, a write once optical card and a reflective-type optical card.

### BACKGROUND ART

Generally, an optical card has very high information recording density, as compared with other recording cards such as a magnetic card, an IC card and so on. The optical card has an optical data recording section on one side of a card substrate. Data is recorded on the optical data recording section by optical energy, chiefly, a laser beam. The recorded information is optically reproduced due to a difference in light reflectivity between the recorded portion and the non-recorded portion.

The general background of such optical card is disclosed in, for example, U.S. Patent Nos. 4,680,460 and 4,673,626. In the conventional optical card, the optical data recording section is formed by one of various materials such as a low melting-point metal such as tellurium. bismuth or the like, silver chloride photographic material, a metal having high reflectivity such as aluminum, and so on.

Optical cards are divided broadly into two categories. One of them is a read-only optical card, that is, a ROM (Read Only Memory) optical card in which a user performs only reading. The other is an additional recording optical card, that is, a so-called WO (Write Once) optical card in which the user preforms also writing. If consideration is made centering around the reading, it is preferable that the optical data recording section in the optical card has high light reflectivity. Accordingly, in the ROM optical card. there are many used metals of high reflectivity such as aluminum and so on, as a pattern forming material of the optical data recording section. In this connection, in such ROM optical card, the pattern forming material generally presents a silver color and, accordingly, the appearance of the card tends to be monotone from the design point of view. For this purpose, Japanese Patent Provisional Publication No. SHO 62-298036 has proposed a technique in which a light colored layer is provided at a location adjacent the optical data recording section to enhance the advantage in the design.

On the other hand, in the WO optical card, the reading is of course important, but consideration must be given to the writing characteristic. For this reason, in the WO card, material is used which has light reflectivity of 40%, 50% or the like, normally, 35% ∼ 55%. In this connection, U.S. Patent No. 4,230,939 discloses a technique in which, when the optical data recording section is made of material having relatively high reflectivity such as bismuth, aluminum or the like, an absorption layer containing dyes is provided on the optical data recording section, thereby reducing writing energy due to the laser beam.

As described above, generally, different pattern forming materials are used in the ROM optical card and the WO optical card, so that there is a considerable difference in light reflectivity between the pattern forming materials. In view of this, conventionally, in the ROM optical card. particularly. in an optical card in which a metal having high reflectivity such as aluminum, its alloy or the like is the forming material of the pattern, an expensive special purpose machine has been required for reading the card. The ROM optical card can be produced in large quantity by an etching technique or the like which employs a photo mask, so that an attempt can be made to reduce the cost. In contradistinction thereto, it has been considered that a problem of the read-only special purpose machine forms a serious obstacle in the spread of the card. It is difficult to use the reader for both types of card, if the two cards are considerably different in light reflectivity.

The way of thinking has not conventionally been known, in which, in the optical cards having their respective light reflectivities, they are caused to coincide with each other in the cards per se. In any of the aforementioned Japanese Patent Provisional Publication No. SHO 62-298036 and U.S. Patent No. 4,230,939, the technique is disclosed in which the colored layer or the absorbing layer is provided in the front side of the light reflecting surface, but no way of thinking is disclosed in which the light reflectivities, especially, the light reflectivities with respect to the reading light are made substantially equal to each other.

JP-A-58011196 discloses an optical card having a recording medium formed by an absorbtion layer and a reflector layer. The absorbtion and reflecting layers contain nitrocellulose as a principal ingredient such that the absorbtion layer absorbs 60% or more of the recording beam and the reflective layer reflects 10% or more of the reading beam.

JP-A-63007535 discloses an optical recording card with a metallic thin film layer on which an optical information pattern has been recorded, and a protecting layer. A photo-absorbing layer is provided on the back surface of the metallic thin film layer. The ratio of photo reflectivity in the part having the metal layer to that in the part having no metal layer is at least 10:1.

### DISCLOSURE OF THE INVENTION

This invention makes it possible to read a plurality of types of optical cards different in light reflectivity from each other, by the same reader, and is effective in an attempt at the spread of the optical cards. Particularly, since the ROM optical card having high reflectivity can be read by the reader for the WO optical card, it is possible to broadly spread the ROM optical card.

The present invention provides a system comprising a write once optical card reader, a write once optical card and a reflective-type optical card;
wherein said reflective-type optical card comprises:
a transparent, protective substrate having a first side for receiving incident reading light and a second side parallel to said first side;
and an optical data section arranged on the opposite side of said substrate to said incident reading light and having a light reflective information pattern formed therein;
and wherein said optical data section has a high reflective portion consisting of a metal material or its alloy, and a low reflective portion;
characterised in that a light-absorptive layer which absorbs reading light is arranged above and spaced from said optical data section such that reading light reflected from said high reflective portion and said low reflective portion passes through said light-absorptive layer before and after reflection from said reflective portions;
and wherein said light-absorptive layer serves to absorb a predetermined amount of the incident and reflected reading light thereby to reduce the light reflectivity of said high reflective portion of said optical data section substantially to that of said write once optical card.

### BRIEF DESCRIPTION OF THE DRAWINGS

The present invention is further described hereinafter, by way of example, with reference to the accompanying drawings, in which:
- Fig. 1: is a cross-sectional view of a first embodiment of an optical card according to the invention;
- Fig. 2: is a cross-sectional view of a second embodiment of an optical card according to the invention:
- Fig. 3: is a characteristic view showing a relationship between a film thickness and transmittance;
- Fig. 4: is a characteristic view showing a relationship between a mixing ratio and the transmittance;
- Fig. 5: is a cross-sectional view of a third embodiment of an optical card according to the invention; and
- Fig. 6: is a cross-sectional view of a fourth embodiment of an optical card according to the invention.

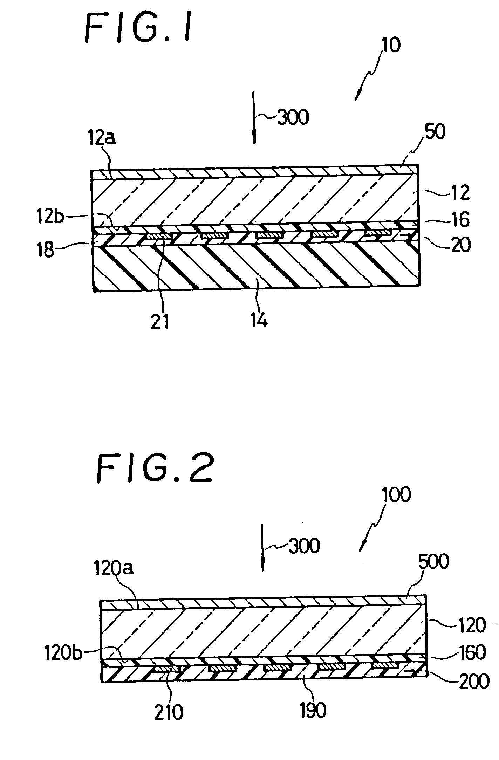

This invention can be applied broadly to optical cards having various cross-sectional constructions. Typical optical cards have a two-layer construction as shown in Fig. 1, or a single-layer construction as shown in Fig. 2. This invention can be applied to any of these cards. Further, the invention can be applied to an optical card having another known construction, for example, a three-layer construction in which an optical data recording section is formed on a flexible thin sheet, and is sandwiched between two card substrates.

In an optical card 10 of a two-layer construction, a transparent protective substrate 12 and a lined support substrate 14 impart rigidity and there is an optical data recording section 20 between the protective substrate 12 and the support substrate 14. Further, in an optical card 100 of a single-layer construction, a transparent protective substrate 120 gives rigidity and an optical data recording section 200 is formed on one side of the protective substrate 120. In either card 10 or 100, the protective substrate 12 or 120 has a first side 12a or 120a and a second side 12b or 120b which are parallel to each other. The first side 12a or 120a of the protective substrate 12 or 120 is the side upon which reading light 300 is incident. The optical data recording section 20 or 200 is arranged on the opposite side 12b or 120b. The optical card 10 of the two-layer construction comprises the protective substrate 12 on the side upon which the reading light 300 is incident, an anchor layer 16 for increasing adhesion of the metal with respect to the protective substrate 12, a metal pattern 21 that is the subject of the optical data recording section 20, an adhesive layer 18 for bonding the protective substrate 12 and the support substrate 14 to each other, and the support substrate 14. The optical card 100 of the single-layer construction comprises an anchor layer 160 on the side 120b of the protective substrate 120 and a metal pattern 210 on the anchor layer 160. The anchor layer 160 and the metal pattern 210 is coated with a protective layer 190.

The metal pattern 21 or 210 in the optical data recording section 20 or 200 contains the contents of the recorded information, in addition to a pre-format. The pre-format is a pattern which has interchangeability to the format of the WO optical card. This metal pattern 21 or 210 can be obtained such that a thin film of a metal or its alloy having high reflectivity is formed on the anchor layer 16 or 160 and, subsequently, the thin film is selectively etched by the use of a known photo etching technique. As the material of the metal pattern 21 or 210, Al, Cu, Ag, Ni, Cr, Zn, Sn, Ti, Si, Sb, Ge, Fe, Co, Au or the like can be used, but Al is particularly preferable. The reason for this is that Al is easy to use in the formation of a thin film and in etching, is less subject to change with age, and is low in cost. The thickness of the film of the metal pattern 21 or 210 is equal to or less than 1 µm, preferably, 100 Å ∼ 0.1 µm.

The transparent protective substrate 12 or 120 is of the order of 300 ∼ 400 µm in thickness.

Various materials can be used, but, particularly, a material is suitable which is high in physical strength and which is superior in transparency and smoothness in surface.

Various resins can be used such as polycarbonate, polyethylene terephthalate, epoxy, polymethyl methacrylate, polyvinyl chloride, polyimide, polysulfone, polyether sulfone, polyether ketone, polyether ether ketone or the like.

The support substrate 14 corresponds to the protective substrate 12 or 120, but transparency is not necessarily required for the support substrate 14. As the support substrate 14, resin can be used such as polycarbonate, polyethylene terephthalate, polymethyl methacrylate, polyvinyl chloride or the like. As the adhesive layer 18, various adhesives can be used such as ultraviolet hardening type, thermoplastic, thermosetting, or two-part adhesive, and so on. The thickness of the adhesive layer 18 is of the order of a few µm, for example.

A specific light-absorbing layer 50 or 500 for absorbing the reading light 300 is provided on the first side 12a or 120a of the protective substrate 12 or 120, above the optical data recording section 20 or 200 if the optical card 10 or 100 is a ROM. The light reflectivity due to the metal pattern 21 or 210 of the optical data recording section 20 or 200 is very high, for example, 80%. In this case, the surface reflectivity of the metal pattern 21 per se is 90%, for example, but the effective light reflectivity with respect to the reading in consideration of the protective substrate 12 or 120 is of the order of 80%. The light-absorbing layer 50 or 500 has the function to reduce the high light reflectivity of the ROM card substantially to the light reflectivity of for example about 40% in a WO optical card.

Normally, the light-absorbing layer 50 or 500 is formed by coating with a binder consisting of resin, a dye or pigment absorbing the reading light 300, and a paint made of solvent. As the reading light 300 a light within a near-infrared range is generally used, for example, a semiconductor laser beam of 780 nm or 830 nm. In contradistinction thereto, as the dye or the pigment having light absorbability, there is a dye such as cyanine, phthalocyanine, methine, merocyanine, aminium, diimonium, transient-metal chelate compound, naphthoquinone, squarilium, azulenium, anthraquinone, chloconium or the like, and a pigment such as carbon black, phthalocyanine or the like. Of these, as the cyanine dye, there are many materials which have strong absorbing ranges in a near-infrared range. In case of such cyanine dye, a small quantity of dye required will suffice and, further, the cyanine dye is superior in uniformity because it is easy to be solved in solvent.

Specific product names will be described below. As a dye, there are PA-1005 and PA-1006 (Mitsui Toatsu Chemicals, Inc.) which are transient-metal chelate compound and are green in color, IR-750 (Nippon Kayaku Co., Ltd.) which is anthraquinone and is green in color, IR-820 (Nippon Kayaku Co., Ltd.) which is polymethenyl and is blue in color, IRG-002 and IRG-003 (Nippon Kayaku Co., Ltd.) which are aminium and are green in color, IRG-022 and IRG-023 (Nippon Kayaku Co., Ltd.) which are diimonium and are green in color, CY-2, CY-4, CY-9 and CY-20 (Nippon Kayaku Co., Ltd.) which are cyanine and are blue in color, NK-125, NK-2014 and NK-2865 (Nippon Kankoh-Shikiso Kenkyusho Co., Ltd.) which are cyanine and cover blue to green in color, and so on. Further, as a pigment, there are carbon black pigments such as channel black, oil furnace black, thermal black and so on. In this connection, these pigments are black in color, and all the dyes are dark in color.

Furthermore, as a resin for use in the light-absorbing layer 50 or 500, various types of resins can be used which are less in turbidity and which are superior in coating ability. For instance, a resin of acrylate, vinyl, cellulose, polyester, polyurethane, epoxy, alkyd, amino, silicone or the like can be used. Alternatively, a resin can be used in which the above resins are blended.

It is to be noted here that factors controlling the light-absorbing characteristic of the light-absorbing layer 50 or 500 include the thickness of the film, and the amount of mixing or a ratio of mixing of the dye and the pigment.

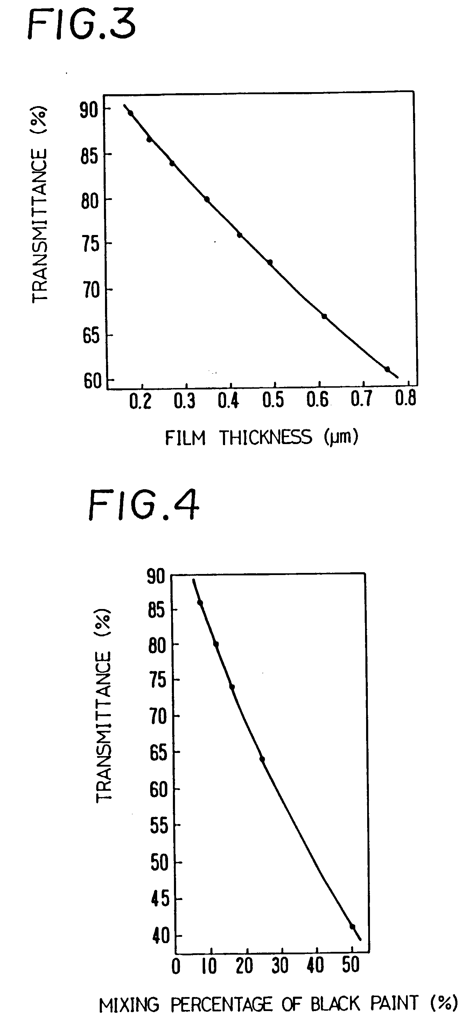

Fig. 3 shows the relationship between the film thickness and the transmittance, and Fig. 4 shows the relationship between the mixing ratio of the dye and the pigment and the transmittance when the film thickness is constant. From these figures, it will be understood that the light-absorbing characteristic of the light-absorbing layer 50 or 500 can be set by the control of either one of the film thickness and the mixing ratio. In this connection, it is possible to enhance light resistance of the light-absorbing layer 50 or 500 by addition of ultraviolet sorbent, antioxidant or the like into the material.

In the optical card 10 or 100 constructed as above, the reading light 300 is incident upon the first side 12a or 120a of the protective substrate 12 or 120, through the light-absorbing layer 50 or 500, and reaches the optical data recording section 20 or 200 through the transparent protective substrate 12 or 120. In the optical data recording section 20 or 200, the metal pattern 21 or 210 is highly reflective, and the rest has a low reflectivity. The incident reading light 300 is reflected by either reflecting surface and is returned to the reader. Predetermined amounts of the incident light and the reflected light are absorbed by the light-absorbing layer 50 or 500. Accordingly, the light returned to the reader is the same as that in which the reflectivity due to the metal pattern 21 or 210 is of the order of substantially 40%, for example. For this reason, it is possible to effectively read the ROM optical card 10 or 100 by the reader for the WO optical card.

The light-absorbing layer may also be arranged between the protective substrate 12 or 120 and the optical data recording section 20 or 200.

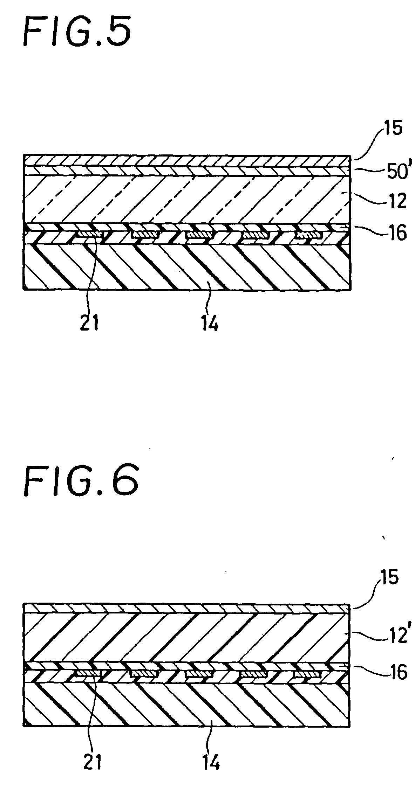

As shown in Figs. 1 and 2, for instance, the light-absorbing layer 50 or 500 may be used also as a surface hardening layer. In addition, as shown in Fig. 5, a light-absorbing layer 50' may be arranged beneath a surface hardening layer 15 in order to prevent contamination or defects from occurring on the surface, or as shown in Fig. 6, a protective substrate 12' per se may be used also as a light-absorbing layer. In the card shown in Fig. 6, when the protective substrate 12' is formed, the previously mentioned dye and pigment are kneaded in the forming material. Further, it is possible to mix the dye and the pigment into an anchor layer 16. In case where the light-absorbing layer is arranged adjacent the metal pattern 21 or 210, however, nonuniformity in the light-absorbing layer might cause an

interference of the light. In view of this, it is preferable that the light-absorbing layer is arranged at a position remote from the metal pattern 21 or 210.

### Example 1

The ROM optical card 10 of the construction shown in Fig. 1 was manufactured through the following steps, with aluminum as a pattern forming material. In the ROM optical card 10 obtained, the light reflectivity of the high reflective portion of the aluminum pattern 21 was 39.5% at the wavelength of 830 nm, and the light reflectivity of the low reflective portion having no pattern 21 was 4.2%. Thus, it was possible to effectively read the recorded information in the optical card 10 by the use of a reader for a WO optical card.
(a) Formation of Anchor Layer 16
   A paint was prepared in which the paint had the following composition, and was sufficiently steered and uniformized. Further, the protective layer 12 made of polycarbonate having a thickness of 0.4 mm was prepared.
   · Silicone·acrylate resin paint 1161 (Dainippon Ink & Chemicals, Incorporated) having a solid body of 20%: 200 weight parts,
   · Ethyl cellosolve: 112.5 weight parts,
   · Cellosolve acetate: 112.5 weight parts, and
   · Hardening agent for silicone·acrylate resin paint 1161: 25 weight parts.

   The prepared paint was dropped onto one side of the protective substrate 12, was spin-coated at 2000 rpm for 30 seconds, and was baked at 120 °C for 60 minutes, thereby forming the anchor layer 16 of about 0.5 µm in thickness.
(b) Formation of Pattern 21
   An aluminum film of 1000 Å in thickness was formed on the anchor layer 16 by vapor deposition and, subsequently, was patterned by the known photo etching technique, thereby forming the predetermined pattern 21.
(c) Formation of Light-Absorbing Layer 50
   A paint is prepared in which the paint has the following composition, and is sufficiently steered and uniformized.
   · Acrylate lacquer containing toluene, butanol and cellosolve as solvent in which their volume ratio of 1 : 1 : 1, and having a solid body of 20%: 10 g, and
   · Dye liquid in which 15 mg of near-infrared absorbing dye IR-820 (Nippon Kayaku Co., Ltd.) is dissolved by 4 g of solvent containing 1,2-dichloroethane and cyclohexanone at the weight ratio of 1 : 1.

   This paint was spin-coated at 2000 rpm for 60 seconds and, subsequently, was dried at 100 °C for 60 minutes. The thus obtained light-absorbing layer 50 had its transmittance of about 70% at the wavelength of 830 nm.
(d) Application of Support Substrate 14
   The support substrate 16 consisting of a vinyl chloride sheet of 0.35 mm in thickness was applied, through the adhesive layer 18, to the side of the protective substrate 12 on which the pattern 21 was formed. The support substrate 16 has beforehand been subject to a design due to printing or the like. As a material of the adhesive layer 18, thermoplastic polyester or polyurethane adhesive was effective for the vinyl chloride sheet. The adhesion was effected by a heat press. The heat press was performed at 100 °C and 20 Kg/cm² for 10 minutes. Subsequently, the adhesion was cooled by water for one minute.
(e) Die Cutting (Punching) of Card
   Subsequently, die cutting was made into the form of a card, to complete the optical card 10 of pocket size.

### Example 2

In the aforesaid example 1, the pattern 21 of the optical data recording section 20 was formed and, subsequently, the light-absorbing layer 50 was formed. In the example 2, the order was reversed, and a ROM optical card of a construction illustrated in Fig. 5 was manufactured through the following steps.
(a)' Formation of Light-Absorbing Layer 50'
   The protective substrate 12 was prepared, which was made of polycarbonate having a smooth surface and having 0.4 mm in thickness. A black paint having the following composition, and sufficiently steered and uniformized was prepared.
   · Silicone·acrylate resin paint 1161 (Dainippon Ink & Chemicals, Incorporated) having a solid body of 45%: 40 weight parts,
   · Cellosolve acetate: 24 weight parts,
   · Vinyl chloride powder in which carbon black was dispersed 30%: 3.6 weight parts,
   · Xylene: 16.2 weight parts,
   · Cyclohexanone: 16.2 weight parts,
   · Ethyl cellosolve: 20 weight parts, and
   · Hardening agent for the silicone·acrylate resin paint 1161: 11.1 weight parts.

   This black paint was dropped onto the protective substrate 12, was spin-coated at 2000 rpm for 30 seconds and, subsequently, was baked at 120 °C for about one hour. The thus obtained light-absorbing layer 50' revealed transmittance of about 66% inclusive of the protective substrate 12, at the wavelength of 830 nm.
(b)' Formation of Surface Hardening Layer 15
   The following materials were mixed with each other, and were sufficiently steered to prepare a paint:
   · Silicone·acrylate resin paint 1161 (Dainippon Ink & Chemicals, Incorporated) having a solid body of 45%: 40 weight parts,
   · Ethyl cellosolve: 25 weight parts,
   · Butanol: 15 weight parts,
   · Cellosolve acetate: 25 weight parts, and
   · Hardening agent for the resin paint 1161: 15.6 weight parts.

   The paint was dropped onto the light-absorbing layer 50', was spin-coated at 700 rpm for 30 seconds and, subsequently, was baked at 120 °C for about one hour, thereby forming the surface hardening layer 15 having about 3 µm in thickness.
(c)' Formation of Anchor Layer 16
   A paint having the following composition was prepared. The paint was spin-coated on the opposite side of the surface hardening layer 15 at 2000 rpm for 30 seconds and, subsequently, was baked at 120 °C for about one hour. Thus, the anchor layer 16 was formed which was 0.5 µm in thickness.
   · Silicone·acrylate resin paint 1161 (Dainippon Ink & Chemicals, Incorporated) having a solid body of 45%: 40 weight parts,
   · Ethyl cellosolve: 80 weight parts,
   · Butanol: 15 weight parts,
   · Cellosolve acetate: 50 weight parts, and
   · Hardening agent for the resin paint 1161: 15.6 weight parts.
(d)' Formation of Pattern 21
   Hereunder, vapor deposition of aluminum and patterning due to photo etching were effected. In this case, when the aluminum was vapor-deposited, the light reflectivity of the aluminum surface as viewed from the front side was about 39%, and the light reflectivity of a portion having no aluminum was about 6%. It is of course that these light reflectivities correspond respectively to that of the portion of the pattern 21 and that of the portion having no pattern 21.

### Example 3

The light-absorbing layer 50' in the example 2 was formed as follows. Light transmittance was set in accordance with a mixing ratio between a paint A and a paint B, that is, the paint B/(paint A + paint B). In this connection, the characteristic view illustrated in Fig. 4 is an example of the transmittance.

20 weight parts of the paint B were added to 100 weight parts of the paint A. The mixture was sufficiently steered to prepare a black paint for formation of the light-absorbing layer 50'. The black paint was dropped onto the protective substrate 12, was spin-coated at 900 rpm for 30 seconds, and was baked at 120 °C for about one hour. Thus, the light-absorbing layer 50' was obtained which had a film thickness of about 3 µm and in which transmittance is about 66% at the wavelength of 830 nm.

### (Composition of Paint A)

· Silicone·acrylate resin paint 1161 (Dainippon Ink & Chemicals, Incorporated) having a solid body of 45%: 40 weight parts,
· Ethyl cellosolve: 15 weight parts.
· Butanol: 15 weight parts,
· Cellosolve acetate: 20 weight parts, and
· Hardening agent for the resin paint 1161: 14 weight parts.

### (Composition of Paint B)

· Silicone·acrylate resin paint 1161 (Dainippon Ink & Chemicals, Incorporated) having a solid body of 45%: 40 weight parts,
· Cellosolve acetate: 4 weight parts,
· Vinyl chloride powder in which carbon black was dispersed 30%: 3.6 weight parts,
· Xylene: 16.2 weight parts, and
· Cyclohexanone: 16.2 weight parts.

## Claims

1. A system comprising a write once optical card reader, a write once optical card and a reflective-type optical card;
wherein said reflective-type optical card comprises:
a transparent, protective substrate (12, 12', 120) having a first side (12a, 120a) for receiving incident reading light and a second side (12b, 120b) parallel to said first side;
and an optical data section (20, 200) arranged on the opposite side of said substrate to said incident reading light and having a light reflective information pattern (21, 210) formed therein;
and wherein said optical data section has a high reflective portion (21, 210) consisting of a metal material or its alloy, and a low reflective portion;
characterised in that a light-absorptive layer (50, 50', 500) which absorbs reading light is arranged above and spaced from said optical data section (20, 200) such that reading light reflected from said high reflective portion (21, 210) and said low reflective portion passes through said light-absorptive layer (50, 50', 500) before and after reflection from said reflective portions;
and wherein said light-absorptive layer (50, 50', 500) serves to absorb a predetermined amount of the incident and reflected reading light thereby to reduce the light reflectivity of said high reflective portion (21, 210) of said optical data section substantially to that of said write once optical card.

2. A system as claimed in Claim 1, wherein said light-absorptive layer (50, 50', 500) has a reading light transmittance in the range 40% to 90%.

3. A system as claimed in Claim 1, wherein said light-absorptive layer (50, 50', 500) has a reading light transmittance of 66%.

4. A system as claimed in Claim 1, wherein the reading light reflectivity of said high reflective portion (21,210) of said optical data section is reduced by said light-absorptive layer (50, 50', 500) to a value in the range of 35% to 55%.

5. A system as claimed in Claim 1, wherein the reading light reflectivity of said high reflective portion (21, 210) is reduced to 40% or less by said light-absorptive layer (50, 50', 500).

6. A system as claimed in Claim 1, wherein the reading light reflectivity of said high-reflective portion (21, 210) is reduced to 39%.

7. A system as claimed in Claim 4, 5 or 6, wherein said reading light reflectivity of said high reflective portion (21, 210) is in the near-infrared.

8. A system as claimed in Claim 3, wherein said reading light transmittance is in the near-infrared.

9. A system as claimed in any of Claims 1 to 8, wherein said light-absorptive layer (50, 50', 500) is a coating layer covering the first side (12a) of the protective substrate (12, 12', 120) and comprises synthetic resin and a dye or a pigment dissolved or dispersed in the synthetic resin.

10. A system as claimed in any of Claims 1 to 9, wherein said light-absorptive layer (50, 50', 500) is used also as a surface hardening layer.

11. A system as claimed in any of Claims 1 to 10, wherein said protective substrate (12, 12', 120) comprises synthetic resin and a dye or a pigment dissolved or dispersed in the synthetic resin, and wherein the protective substrate per se also serves as said light-absorptive layer.

12. A system as claimed in Claim 9 or 11, wherein the dye and the pigment have their respective absorbing ranges in near-infrared.

13. A system as claimed in Claims 1 to 12, wherein the material forming said high reflective portion (21, 210) of said optical data section (20, 200) is aluminium or its alloy.

14. A system as claimed in Claims 1 to 13, wherein a support substrate (14) is further applied to the second side (12b, 120b) of said protective substrate (12, 12', 120), and wherein said optical data section (20, 200) is sandwiched between the support substrate and the protective substrat

## Patentansprüche

1. System mit einem Lesegerät für eine einmalig beschreibbare optische Karte, einer einmalig beschreibbaren optischen Karte und einer optischen Karte vom Reflexionstyp;
wobei die optische Karte vom Reflexionstyp aufweist:
ein lichtdurchlässiges Schutzsubstrat (12, 12', 120) mit einer ersten Seite (12a, 120a) für den Empfang von auffallendem Leselicht und einer zweiten Seite (12b, 120b), die zur ersten Seite parallel ist;
und einen optischen Datenabschnitt (20, 200), welcher auf der dem auffallenden Leselicht entgegengesetzten Seite des Substrats angeordnet ist und eine darin ausgebildete, lichtreflektierende Informationsstruktur (21, 210) aufweist;
und wobei der optische Datenabschnitt einen stark reflektierenden Teil (21, 210), der aus einem metallischen Material oder einer Legierung dieses Metalls besteht, sowie einen schwach reflektierenden Teil aufweist;
dadurch gekennzeichnet, daß eine lichtabsorbierende Schicht (50, 50', 500), die Leselicht absorbiert, über dem optischen Datenabschnitt (20, 200) und von diesem beabstandet angeordnet ist, so daß Leselicht, das von dem stark reflektierenden Teil (21, 210) und von dem schwach reflektierenden Teil reflektiert wird, vor und nach der Reflexion an den reflektierenden Teilen die lichtabsorbierende Schicht (50, 50', 500) passiert;
und wobei die lichtabsorbierende Schicht (50, 50', 500) dazu dient, einen vorgegebenen Anteil des auffallenden und des reflektierten Leselichts zu absorbieren und dadurch das Lichtreflexionsvermögen des stark reflektierenden Teils (21, 210) des optischen Datenabschnitts im wesentlichen auf das Reflexionsvermögen der einmalig beschreibbaren optischen Karte zu reduzieren.

2. System nach Anspruch 1, wobei die lichtabsorbierende Schicht (50, 50', 500) eine Lichtdurchlässigkeit für das Leselicht im Bereich von 40% bis 90% aufweist.

3. System nach Anspruch 1, wobei die lichtabsorbierende Schicht (50, 50', 500) eine Lichtdurchlässigkeit für das Leselicht von 66% aufweist.

4. System nach Anspruch 1, wobei das Leselicht-Reflexionsvermögen des stark reflektierenden Teils (21, 210) des optischen Datenabschnitts durch die lichtabsorbierende Schicht (50, 50', 500) auf einen Wert im Bereich von 35% bis 55% reduziert wird.

5. System nach Anspruch 1, wobei das Leselicht-Reflexionsvermögen des stark reflektierenden Teils (21, 210) durch die lichtabsorbierende Schicht (50, 50', 500) auf einen Wert von höchstens 40% reduziert wird.

6. System nach Anspruch 1, wobei das Leselicht-Reflexionsvermögen des stark reflektierenden Teils (21, 210) auf 39% reduziert wird.

7. System nach Anspruch 4, 5 oder 6, wobei das Leselicht-Reflexionsvermögen des stark reflektierenden Teils (21, 210) im nahen Infrarotbereich liegt.

8. System nach Anspruch 3, wobei die Durchlässigkeit für das Leselicht im nahen Infrarotbereich liegt.

9. System nach einem der Ansprüche 1 bis 8, wobei die lichtabsorbierende Schicht (50, 50', 500) eine Überzugsschicht ist, welche die erste Seite (12a) des Schutzsubstrats (12, 12', 120) bedeckt, und Kunstharz sowie einen Farbstoff oder ein Pigment aufweist, der (das) in dem Kunstharz gelöst oder dispergiert ist.

10. System nach einem der Ansprüche 1 bis 9, wobei die lichtabsorbierende Schicht (50, 50', 500) außerdem als oberflächenhärtende Schicht verwendet wird.

11. System nach einem der Ansprüche 1 bis 10, wobei das Schutzsubstrat (12, 12', 120) ein Kunstharz sowie einen Farbstoff oder ein Pigment aufweist, der (das) in dem Kunstharz gelöst oder dispergiert ist, und wobei das Schutzsubstrat als solches auch als lichtabsorbierende Schicht dient.

12. System nach Anspruch 9 oder 11, wobei die Absorptionsbereiche des Farbstoffs bzw. des Pigments im nahen Infrarotbereich liegen.

13. System nach einem der Ansprüche 1 bis 12, wobei das Material, welches den stark reflektierenden Teil (21, 210) des optischen Datenabschnitts (20, 200) bildet, Aluminium oder eine Aluminiumlegierung ist.

14. System nach einem der Ansprüche 1 bis 13, wobei auf die zweite Seite (12b, 120b) des Schutzsubstrats (12, 12', 120) ferner ein Trägersubstrat (14) aufgebracht wird, und wobei der optische Datenabschnitt (20, 200) zwischen dem Trägersubstrat und dem Schutzsubstrat eingelagert ist.

## Revendications

1. Système comprenant un lecteur de carte optique à seul enregistrement, une carte optique à seul enregistrement et une carte optique du type à réflexion; dans lequel ladite carte optique du type à réflexion comprend:
un support protecteur transparent (12, 12', 120) ayant une première face (12a, 120a) pour recevoir la lumière de lecture incidente et une deuxième face (12b, 120b) parallèle à ladite première face;
et une section de données optiques (20, 200) disposée sur la face opposée dudit support pour ladite lumière de lecture incidente et ayant un motif d'information réfléchissant la lumière (21, 210), réalisé sur celui-ci;
et dans lequel ladite section de données optiques a une partie fortement réfléchissante (21, 210) constituée d'un matériau métallique ou d'un de ses alliages et une partie faiblement réfléchissante;
caractérisée en ce qu'une couche photoabsorbante (50, 50', 500) absorbant la lumière de lecture, est disposée au-dessus de ladite section de données optiques (20, 200) et à l'écart de celle-ci, de façon que la lumière de lecture réfléchie par ladite partie fortement réfléchissante (21. 210) et par ladite partie faiblement réfléchissante traverse ladite couche photoabsorbante (50, 50', 500) avant et après la réflexion par lesdites parties réfléchissantes;
et dans lequel ladite couche photoabsorbante (50, 50', 500) sert à absorber une quantité prédéterminée de la lumière de lecture incidente et réfléchie de manière à réduire la réflectivité de la lumière de ladite partie fortement réfléchissante (21, 210) de ladite section de données optiques, d'une manière notable par rapport à celui de ladite carte optique à seul enregistrement.

2. Système selon la revendication 1, dans lequel ladite couche photoabsorbante (50, 50', 500) a une transmittance pour la lumière de lecture comprise dans l'intervalle de 40% à 90%.

3. Système selon la revendication 1, dans lequel ladite couche photoabsorbante (50, 50', 500) a une transmittance pour la lumière de lecture de 66%.

4. Système selon la revendication 1, dans lequel la réflectivité de la lumière de lecture de ladite partie fortement réfléchissante (21, 210) de ladite section de données optiques est diminuée par ladite couche photoabsorbante (50, 50', 500) jusqu'à une valeur comprise dans l'intervalle de 35% à 55%.

5. Système selon la revendication 1, dans lequel la réflectivité pour la lumière de lecture de ladite partie fortement réfléchissante (21, 210) est diminuée à 40% ou moins par ladite couche photoabsorbante (50, 50', 500).

6. Système selon la revendication 1, dans lequel la réflectivité pour la lumière de lecture de ladite partie fortement réfléchissante (21. 210) est diminuée jusqu'à 39%.

7. Système selon la revendication 4, 5 ou 6, dans lequel ladite réflectivité pour la lumière de lecture de ladite partie fortement réfléchissante (21, 210) se situe dans l'infrarouge proche.

8. Système selon la revendication 3, dans lequel ladite transmittance pour la lumière de lecture se situe dans l'infrarouge proche.

9. Système selon l'une quelconque des revendications 1 à 8, dans lequel ladite couche photoabsorbante (50, 50', 500) est une couche de revêtement recouvrant la première face (12a) du support protecteur (12, 12', 120) et comprend une résine synthétique et un colorant ou un pigment dissous ou dispersé dans la résine synthétique.

10. Système selon l'une quelconque des revendications 1 à 9, dans lequel ladite couche photoabsorbante (50, 50', 500) est utilisée également comme couche durcissant la surface.

11. Système selon l'une quelconque des revendications 1 à 10, dans lequel ledit support protecteur (12, 12', 120) comprend une résine synthétique et un colorant ou un pigment dissous ou dispersé dans la résine synthétique et dans lequel le support protecteur sert tel quel également de couche photoabsorbante.

12. Système selon la revendication 9 ou 11, dans lequel le colorant et le pigment ont leurs intervalles d'absorption respectifs situés dans l'infrarouge proche.

13. Système selon les revendications 1 à 12, dans lequel le matériau formant la partie fortement réfléchissante (21, 210) de ladite section des données optiques (20, 200) est de l'aluminium ou l'un de ses alliages.

14. Système selon les revendications 1 à 13, dans lequel un support de base (14) est appliqué en outre sur la deuxième face (12b, 120b) dudit support protecteur (12, 12', 120) et dans lequel ladite section de données optiques (20, 200) est interposée entre le support de base et le support protecteur.
